# EUROPEAN PATENT SPECIFICATION

(11) **EP 3 085 620 B1**
(45) Date of publication and mention of the grant of the patent: **24.10.2018**
(21) Application number: 15164820.1
(22) Date of filing: 23.04.2015
(51) Int. Cl.: B64D 11/02

(54) **AIRCRAFT PROVIDED WITH A FLUID TANK MODULE**
FLUGZEUG UMFASSEND EIN FLÜSSIGKEITSBEHÄLTERMODUL
AÉRONEF COMPRENANT UN MODULE DE RÉSERVOIR DE FLUIDE

(43) Date of publication of application: 26.10.2016
(73) Proprietor: Airbus Operations GmbH, 21129 Hamburg (DE)
(72) Inventor: Frankenberger, Eckart, 21129 Hamburg (DE)
(74) Representative: Schicker, Silvia

(56) References cited:
- WO-A1-2007/017184
- WO-A1-2012/101439
- DE-A1- 10 339 507
- US-A1- 2007 069 078

## Description

The invention relates to an aircraft provided with a fluid tank module which is in particular suitable for collecting water or waste water on board an aircraft. Furthermore, the invention relates to an aircraft comprising a water supply system or a waste water system each of which is equipped with a fluid tank module of this kind.

Modern passenger aircraft are equipped with a water supply system which serves to provide water consuming components on board the aircraft such as, for example, galleys, lavatories and water operated cooling systems with fresh water. Furthermore, a waste water system serves to discharge waste water from the water consuming components. The fresh water to be supplied to the water consuming components typically is accommodated in pressure tanks, the interior of which is held under an elevated pressure in order to provide for a pressure driven conveyance of fresh water from the tanks through a line system of the water supply system to the water consuming components. To the contrary, the waste water discharged from the water consuming components is collected in vacuum tanks, the interior of which is held under a reduced pressure. Hence, a suction force is provided for conveying the waste water from the water consuming components through a line system of the waste water system to the vacuum tanks.

Both, fresh water pressure tanks and waste water vacuum tanks, at present are manufactured from fibre reinforced composite materials in a generally frustroconical shape with rounded or curved end faces. The tanks, which typically have a volume of about 1000 litres, are installed within a lower deck area of an aircraft cabin adjacent to a pressure bulkhead separating a pressurized area of the aircraft cabin from a non-pressurized area of the aircraft cabin. Holding brackets support the tanks in their installation position and support struts serve to dissipate static and dynamic forces into the primary structure of the aircraft. However, the supporting structure of the tanks requires the holding brackets and the support struts to comprise massive titanium components in order to allow a distribution of the forces to a larger surface area of the primary structure. Piping and lines of further aircraft supply systems such as, for example, air lines, fuel lines, hydraulic lines and electric lines are passed beside or below the tanks and individually fixed to the primary structure by respective holders.

The invention is directed at the object to provide an aircraft provided with a fluid tank module which is suitable for use in a water supply system or a waste water system on board an aircraft and which can be installed in an aircraft cabin in an easy and installation space saving manner. Furthermore, the invention is directed at the object to provide an aircraft comprising a water supply system or a waste water system each of which is equipped with an aircraft fluid tank module of this kind.

These objects are addressed by an aircraft provided with a fluid tank module having the features of claim 1, an aircraft having the features of claim 10 and an aircraft having the features of claim 12.

The document DE 103 39 507 A1 discloses an aircraft provided with a fluid tank module.

An aircraft fluid tank module comprises a pressure-free tank shell. As compared to prior art water and waste water tanks installed in passenger aircraft, the aircraft fluid tank module thus is not adapted to be held under an elevated or a reduced pressure. Instead, the tank shell of the aircraft fluid tank module only allows a pressure-free accommodation of fluid, i.e. the pressure of the fluid accommodated within the tank shell of the aircraft fluid tank module corresponds to the ambient pressure prevailing in the region of the aircraft cabin where the aircraft fluid tank module is installed. As a result, the pressure-free tank shell no longer needs to be made of an expensive high-load resistant material such as a fibre reinforced plastic material. Instead, a cheaper, but still light-weight material such as, for example, an injection mouldable plastic material may be used for manufacturing the pressure-free tank shell.

In addition, the geometry of the tank shell no longer is restricted to designs which are suitable for operation under an elevated or a reduced pressure. Instead, the pressure-free tank shell is provided with an outer surface, a contour of which is adjusted to a contour of an installation space provided on board an aircraft for installation of the aircraft fluid tank module. In particular, the outer surface of the pressure-free tank shell may have any suitable contour which fits the contour of the existing space intended for installation of the aircraft fluid tank module in the aircraft cabin. Hence, the aircraft fluid tank module uses the restricted installation space on board an aircraft in a particularly efficient manner.

Furthermore, the aircraft fluid tank module is provided with at least one fastening device adapted to fasten the aircraft fluid tank module to a primary structure element of an aircraft. The fastening device may, for example, be designed in the form of a fastening lug provided with a bore for receiving a bolt or a rivet for fastening the aircraft fluid tank module to a respective primary structure element. Alternatively, the
fastening device may also comprise a latching mechanism or any other type of attachment mechanism which allows the aircraft fluid tank module to be fastened to a primary structure element of the aircraft. A plurality of fastening devices may be provided if needed to securely attach the aircraft fluid tank module to the primary structure of the aircraft. The primary structure element which is adapted to interact with the fastening device in order to attach the aircraft fluid tank module to the aircraft's primary structure may be a rib or a stringer.

The aircraft fluid tank module thus can quickly and easily be installed in the aircraft cabin without a plurality of expensive fastening and supporting components being necessary. Furthermore, with the aircraft fluid tank module, even when the aircraft fluid tank module has a large volume in the range of approximately 1000 litres, the load dissipation into the primary aircraft structure is simplified. Hence, the aircraft fluid tank module can be used as a water tank in a water supply system or a waste water system of an aircraft which can be installed within the aircraft in a simple and cost-efficient manner.

The contour of at least a first portion of the outer surface of the pressure-free tank shell may be adjusted to a contour of an inner surface of an aircraft fuselage outer shell. In particular, the first portion of the outer surface of the pressure-free tank shell may have a curvature which is adjusted to a curvature of the inner surface of an aircraft fuselage outer shell. The aircraft fluid tank module then can be arranged adjacent to the inner surface of an aircraft fuselage outer shell while using the existing installation space on board an aircraft in a particularly efficient manner.

Preferably, the first portion of the outer surface of the pressure-free tank shell is provided with at least one recess adapted to accommodate a primary structure element of the aircraft when the aircraft fluid tank module is mounted in the aircraft. The aircraft fluid tank module then can be installed in the aircraft cabin in a particularly secure and space saving manner with the first portion of the outer surface of the pressure-free tank shell extending closely adjacent to the aircraft fuselage outer shell. If needed, plural recesses may be provided in the first portion of the outer surface of the pressure-free tank shell for accommodating a plurality of primary aircraft structure elements.

The at least one recess provided in the first portion of the outer surface of the pressure-free tank shell in particular may be adapted to accommodate at least one of a stringer and a rib. In dependence on the size of the first portion of the outer surface
of the pressure-free tank shell and in dependence on the distance(s) provided between adjacent ribs of an aircraft wherein the aircraft fluid tank module should be installed, a plurality of parallel extending recesses for accommodating the ribs of the aircraft's primary structure which are present in the region of the installation space of the aircraft fluid tank module may be provided in the first portion of the outer surface of the pressure-free tank shell. Alternatively or additionally thereto, the first portion of the outer surface of the pressure-free tank shell may be provided with a plurality of parallel extending recesses for accommodating the stringers of the aircraft's primary structure which are present in the region of the installation space of the aircraft fluid tank module.

Preferably, an isolation material layer is applied to the first portion of the outer surface of the pressure-free tank shell. The isolation material layer isolates the pressure-free tank shell and the fluid accommodated therein from the aircraft fuselage outer shell and hence the aircraft environment and thus helps saving energy for maintaining the fluid contained in the aircraft fluid tank module at a desired temperature. Furthermore, the isolation material layer may be shaped in such a manner that an outer surface of the isolation material layer closely follows the contour of the aircraft fuselage outer shell, the ribs and the stringers present in the region of the installation space of the aircraft fluid tank module. The first portion of the outer surface of the aircraft fluid tank module's pressure-free tank shell then tightly abuts against the aircraft's primary structure allowing the aircraft fluid tank module to be mounted in a particularly secure and space-saving manner.

The isolation material layer applied to the first portion of the outer surface of the pressure-free tank shell may be made of an isolation foam. An isolation material layer made of a foam material is light-weight, but dimensionally stable and load resistant, at least to a certain extent and thus particularly suitable for being arranged on the first portion of the outer surface of the pressure-free tank shell between the outer surface of the pressure-free tank shell and the aircraft's primary structure, i.e. the aircraft fuselage outer shell, the ribs and the stringers present in the region of the installation space of the aircraft fluid tank module.

According to the invention, the outer surface of the pressure-free tank shell is provided with at least one raceway adapted to attach at least one tube or line to the pressure-free tank shell. If needed, plural raceways may be provided in the region of the outer surface of the pressure-free tank shell which may, for example extend parallel to each other. Furthermore, the raceway(s) may be designed, i.e. shaped and dimensioned, in such a manner that, as desired, a single tube or line or a tube or line bundle may be accommodated in each raceway and thus attached to the pressure-free tank shell.

According to the invention, the fluid tank module is adapted to be used as a carrier element for piping and lines of further aircraft supply systems such as, for example, air lines, fuel lines, hydraulic lines and electric lines. The at least one tube or line may be arranged in the raceway and hence attached to the pressure-free tank shell of the aircraft fluid tank module in a particularly comfortable manner already outside the aircraft, i.e. before the aircraft fluid tank module is installed inside the aircraft cabin. If need be, it is, however, also conceivable to first install the aircraft fluid tank module inside the aircraft cabin and only thereafter attach the at least one tube or line to aircraft fluid tank module's pressure-free tank shell. In any case, it is no longer necessary to individually fasten the at least one tube or line to the aircraft's primary structure by means of individual holders. The aircraft fluid tank module thus also simplifies the assembly and installation of other aircraft systems comprising tubes or lines to be installed in the region of the installation space of the aircraft fluid tank module.

The at least one raceway may comprise a groove formed in the outer surface of the pressure-free tank shell and being adapted to accommodate at least one tube or line. The design, i.e. the shape and dimensions of the groove may be adapted to the shape and the dimensions of the tube or line (bundle) to be accommodated therein. For example, the groove may have a rectangular or semi-circular cross-section in dependence of the shape and the dimensions of the tube or line (bundle) to be accommodated therein. Furthermore, the at least one raceway may comprise at least one attachment device adapted to attach the at least one tube or line accommodated in the groove to the pressure-free tank shell. The attachment device may, for example, be designed in the form of a snap-and-click clip in order to allow a quick and easy attachment of the at least one tube or line. If needed, plural attachment devices may be provided which may be arranged spaced from each other at suitable distances along the groove.

The at least one raceway preferably is arranged on a second portion of the outer surface of the pressure-free tank shell which faces away from the aircraft fuselage outer shell when the aircraft fluid tank module is mounted in the aircraft. The at least one tube or line then may be attached to a portion of the surface of the pressure-free tank shell which is easily accessible from the interior of the aircraft cabin in a comfortable manner. Assembly and maintenance of the tube or line thus is simplified.

The at least one raceway preferably extends substantially parallel to a longitudinal axis of the aircraft when the aircraft fluid tank module is mounted in the aircraft. The raceway then is particularly suitable for accommodating a supply tube or line of an aircraft system which connects components of the aircraft system arranged at a distance from each other along the longitudinal axis of the aircraft which is typical for the main supply tubes or lines of major aircraft supply system such as, for example, an air-conditioning system, cooling systems, hydraulic systems, electric systems and communication systems.

An aircraft water supply system comprises an above defined aircraft fluid tank module and a water supply line connecting the aircraft fluid tank module to a water consuming aircraft component so as to supply water accommodated in the aircraft fluid tank module to the water consuming aircraft component. The water consuming component may, for example, be a galley, a lavatory or any other water consuming component present on board an aircraft.

The aircraft water supply system preferably further comprises a pump adapted to convey water accommodated in the aircraft fluid tank module to the water consuming aircraft component. The pump thus takes over the conveying function of conveying water accommodated in the aircraft fluid tank module to the water consuming aircraft component which, in prior art aircraft water supply systems, is fulfilled by the pressure tank proving for a pressure-driven conveyance of the water accommodated in the aircraft fluid tank module to the water consuming aircraft component.

An aircraft waste water system comprises an above defined aircraft fluid tank module and a waste water line connecting a water consuming aircraft component to the aircraft fluid tank module so as to discharge waste water from the water consuming aircraft component to the aircraft fluid tank module. Like in the aircraft water supply system, the water consuming component may, for example, be a galley, a lavatory or any other water consuming component present on board an aircraft.

Preferably, the aircraft waste water system further comprises a pre-tank designed in form of a vacuum tank and being adapted to provide a pressure gradient between the water consuming aircraft component and the pre-tank and hence a suction force for conveying the waste water from the water consuming aircraft component to the pre-tank. The pre-tank thus takes over the conveying function of conveying the waste water from the water consuming aircraft component to the pre-tank which, in prior art aircraft waste water systems, is fulfilled by the vacuum tank. The lavatories of an aircraft equipped with the aircraft waste water system thus can be provided with the approved vacuum flush system although the main waste water tank is designed in the form of an above defined aircraft fluid tank module having a pressure-free tank shell.

The aircraft waste water system may further comprise a pump adapted to convey water accommodated in the pre-tank into the aircraft fluid tank module.

A preferred embodiment of the invention will now be explained in greater detail with reference to the accompanying schematic drawings, in which:
- Figure 1: shows a three-dimensional view of an aircraft fluid tank module,
- Figure 2: shows a front view of the aircraft fluid tank module according to Figure 1 which is installed in an aircraft,
- Figure 3: shows the basic system architecture of an aircraft water supply system equipped with an aircraft fluid tank module according to Figure 1, and
- Figure 4: shows the basic system architecture of an aircraft waste water system equipped with an aircraft fluid tank module according to Figure 1.

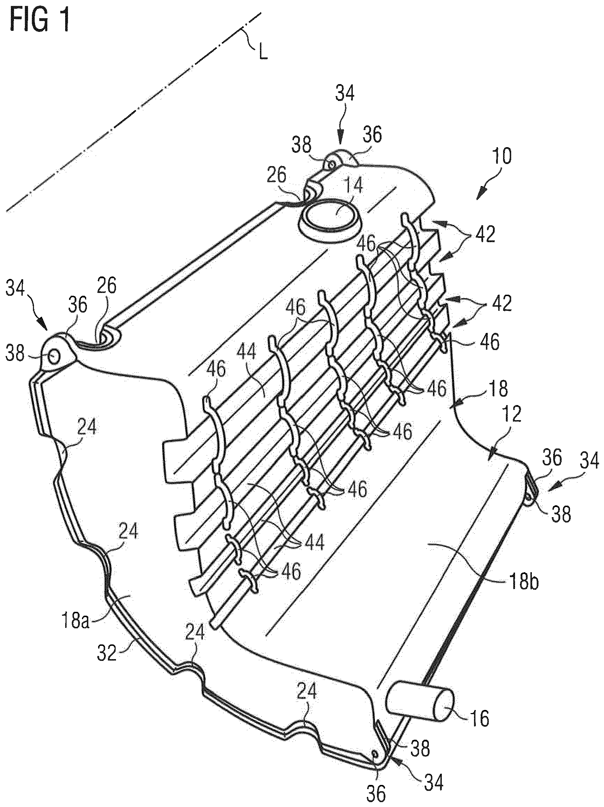

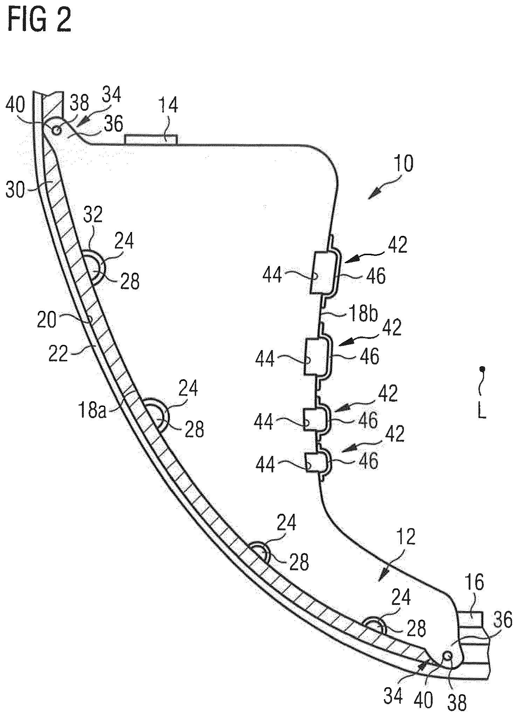

An aircraft fluid tank module 10 depicted in Figures 1 and 2 comprises a pressure-free tank shell 12 which may be made, for example, of an injection mouldable plastic material. Hence, the aircraft fluid tank module 10 is not adapted to be held under an elevated or a reduced pressure. Instead, the tank shell 12 of the aircraft fluid tank module 10 only allows a pressure-free accommodation of fluid, i.e. the pressure of the fluid accommodated within the tank shell 12 of the aircraft fluid tank module 10 corresponds to the ambient pressure prevailing in the environment of the aircraft fluid tank module 10. Fluid may be supplied to the aircraft fluid tank module 10 via a fluid inlet 14. A discharge of fluid from the aircraft fluid tank module 10 is possible via a fluid outlet 16.

The pressure-free tank shell 12 is provided with an outer surface 18, a contour of which is adjusted to a contour of an installation space provided on board an aircraft for installation of the aircraft fluid tank module 10. In particular, as becomes apparent from Figure 2, the contour of a first portion 18a of the outer surface 18 of the pressure-free tank 12 shell is adjusted to a contour of an inner surface 20 of an aircraft fuselage outer shell 22. The pressure-free tank 12 thus, in the region of the first portion 18a of its outer surface 18, is provided with a curvature that is adjusted to the curvature of the inner surface 20 of the aircraft fuselage outer shell 22. Hence, the aircraft fluid tank module 10 can be arranged adjacent to the inner surface 20 of the aircraft fuselage outer shell 22 while using the existing installation space provided for the aircraft fluid tank module 10 in an aircraft cabin in a particularly efficient manner.

In the region of its first portion 18a, the outer surface 18 of the pressure-free tank shell 12 is provided with a plurality of recesses 24, 26. Each recess 24, 26 is adapted to accommodate a primary structure element of the aircraft when the aircraft fluid tank module 10 is mounted in the aircraft cabin. Specifically, a plurality of first recesses 24 is provided in the region of the first portion 18a of the outer surface 18 of the pressure-free tank shell 12 which extend substantially parallel to each other along a longitudinal axis L of the aircraft. Each first recess 24 serves to accommodate a stringer 28 of the aircraft's primary structure. Furthermore, a plurality of second recesses 26 is provided in the region of the first portion 18a of the outer surface 18 of the pressure-free tank shell 12 which extend substantially parallel to each other and perpendicular to the longitudinal axis L of the aircraft. Each second recess 24 serves to accommodate a rib 30 of the aircraft's primary structure.

The aircraft fluid tank module 10 thus can be installed in the aircraft cabin in a particularly secure and space saving manner with the first portion 18a of the outer surfaced of the pressure-free tank shell 12 extending closely adjacent to the aircraft fuselage outer shell 22. Of course, the number and the spacing of the first and the second recesses 24, 26 may be adjusted to the spacing of the stringers 28 and the ribs 30 of the aircraft as required.

An isolation material layer 32 which is made of an isolation foam is applied to the first portion 18a of the outer surface 18 of the pressure-free tank shell 12. The isolation material layer 32 isolates the pressure-free tank shell 12 and the fluid accommodated therein from the aircraft fuselage outer shell 22 and hence the aircraft environment and thus helps saving energy for maintaining the fluid contained in the aircraft fluid tank module 10 at a desired temperature. Furthermore, the isolation material layer 32, which is dimensionally stable and load resistant at least to a certain extent, is shaped in such a manner that an outer surface of the isolation material layer 32 closely follows the contour of the aircraft fuselage outer shell 22, the stringers 28 and the ribs 30 present in the region of the installation space of the aircraft fluid tank module 10. The first portion 18a of the outer surface 18 of the aircraft fluid tank module's 10 pressure-free tank shell 12 thus tightly abuts against the aircraft's primary structure allowing the aircraft fluid tank module 10 to be mounted in a particularly secure and space-saving manner.

The aircraft fluid tank module 10 is fastened to a primary structure element of the aircraft by means of suitable fastening devices 34. The fastening devices 34 may be attached to or formed integral with the pressure-free tank shell 12 of the aircraft fluid tank module 10. In the embodiment of an aircraft fluid tank module 10 which is depicted in Figures 1 and 2, four fastening devices 36 are provided which are adapted to fasten the aircraft fluid tank module 10 to two ribs 30 of the aircraft's primary structure. Each fastening device 36 is designed in the form of a fastening lug 36 which is provided with a bore 38 for receiving a bolt or rivet 40 for fastening the aircraft fluid tank module 10 to a respective rib 30 of the aircraft's primary structure. Alternatively, the fastening device 36 may also comprise a latching mechanism or any other type of attachment mechanism which allows the aircraft fluid tank module 10 to be fastened to a primary structure element of the aircraft. The aircraft fluid tank module 10 thus can quickly and easily be installed in the aircraft cabin without a plurality of expensive fastening and supporting components being necessary.

In the region of a second portion 18b which faces away from the aircraft fuselage outer shell 22 when the aircraft fluid tank module 10 is mounted in the aircraft cabin, the outer surface 18 of the pressure-free tank shell 12 is provided with a plurality of raceways 42, each raceway 42 being adapted to attach at least one tube or line to the pressure-free tank shell 12. Each raceway 42 comprises a groove 44 formed in the outer surface 18 of the pressure-free tank shell 12 and being adapted to accommodate at least one tube or line. The design, i.e. the shape and dimensions of the groove 44 is adapted to the shape and the dimensions of the tube or line (bundle) to be accommodated therein.

Furthermore, each raceway 42 comprises a plurality of attachment devices 46 which are arranged spaced from each other at suitable distances along the groove 44 and which are adapted to attach the at least one tube or line accommodated in the groove 44 to the pressure-free tank shell 12. The attachment devices 46 may, for example, be designed in the form of a snap-and-click clip in order to allow a quick and easy attachment of the at least one tube or line.

Due to the presence of the raceways 42, the aircraft fluid tank module 10 may be used as a carrier element for piping and lines of further aircraft supply systems such as, for example, air lines, fuel lines, hydraulic lines and electric lines. The tubes or lines may be arranged in the raceways 42 and hence attached to the pressure-free tank shell 12 of the aircraft fluid tank module 10 in a particularly comfortable manner already outside the aircraft, i.e. before the aircraft fluid tank module 10 is installed inside the aircraft cabin. If need be, it is, however, also conceivable to first install the aircraft fluid tank module 10 inside the aircraft cabin and only thereafter attach the at least one tube or line to aircraft fluid tank module's 10 pressure-free tank shell 12 in a comfortable manner, since the raceways 42 are arranged on the second portion 18a of the outer surface 18 of the pressure-free tank shell 12 which faces away from the aircraft fuselage outer shell 22 and hence is easily accessible from the interior of the aircraft cabin. In any case, it is no longer necessary to individually fasten the at least one tube or line to the aircraft's primary structure by means of individual holders. The aircraft fluid tank module 10 thus also simplifies the assembly and installation of other aircraft systems comprising tubes or lines to be installed in the region of the installation space of the aircraft fluid tank module 10.

The raceways 42 extend substantially parallel to each other and substantially parallel to the longitudinal axis L of the aircraft when the aircraft fluid tank module 10 is mounted in the aircraft. The raceways 42 thus are particularly suitable for accommodating a supply tube or line of an aircraft system which connects components of the aircraft system arranged at a distance from each other along the longitudinal axis of the aircraft which is typical for the main supply tubes or lines of major aircraft supply system such as, for example, an air-conditioning system, cooling systems, hydraulic systems, electric systems and communication systems.

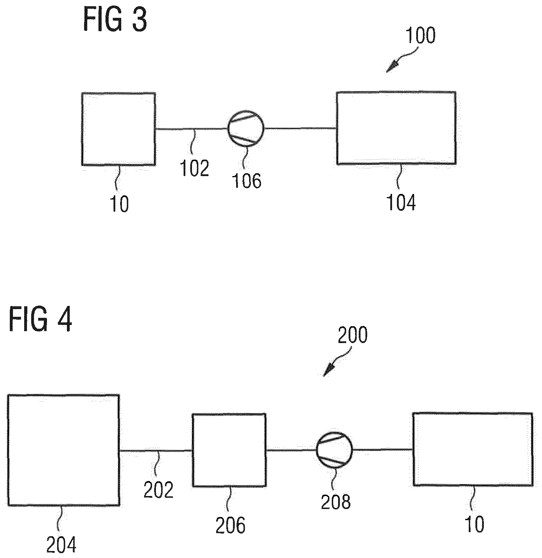

The aircraft fluid tank module 10 according to Figures 1 and 2 is particularly suitable for use as a fresh water tank in a water supply system 100 depicted in Figure 3 or as a waste water tank in a waste water system 200 depicted in Figure 4.

The aircraft water supply system 100 as shown in Figure 3, beside the aircraft fluid tank module 10 as a fresh water tank, comprises a water supply line 102 connecting the aircraft fluid tank module 10 to a water consuming aircraft component 104 so as to supply water accommodated in the aircraft fluid tank module 10 to the water consuming aircraft component 104. The water consuming component 104 may, for example, be a galley, a lavatory or any other water consuming component present on board an aircraft. The aircraft water supply system 100 further comprises a pump 106 which serves to convey water accommodated in the aircraft fluid tank module 10 to the water consuming aircraft component 104.

The aircraft waste water system 200 as shown in Figure 3, beside the aircraft fluid tank module 10 as a waste water tank, a waste water line 202 connecting a water consuming aircraft component 204 to the aircraft fluid tank module 10 so as to discharge waste water from the water consuming aircraft component 204 to the aircraft fluid tank module 10. Like in the aircraft water supply system 100, the water consuming component 204 may, for example, be a galley, a lavatory or any other water consuming component present on board an aircraft.

The aircraft waste water system 200 further comprises a pre-tank 206 designed in form of a vacuum tank and being adapted to provide a pressure gradient between the water consuming aircraft component 204 and the pre-tank 206 and hence a suction force for conveying the waste water from the water consuming aircraft component 204 to the pre-tank 206. The lavatories of an aircraft equipped with the aircraft waste water system 200 thus can be provided with the approved vacuum flush system although the main waste water tank is designed in the form of an above defined aircraft fluid tank module 10 having a pressure-free tank shell 12. Finally, the aircraft waste water system 200 comprises a pump 208 which serves to convey water accommodated in the pre-tank 206 into the aircraft fluid tank module 10.

## Claims

1. Aircraft provided with a fluid tank module (10), the fluid tank module (10) comprising:
- a pressure-free tank shell (12) having an outer surface (18), a contour of which is adjusted to a contour of an installation space provided on board the aircraft for installation of the fluid tank module (10), wherein the pressure of a fluid accommodated within the tank shell (12) of the fluid tank module (10) corresponds to the ambient pressure prevailing in a region of the aircraft where the fluid tank module (10) is installed, and
- at least one fastening device (34) adapted to fasten the fluid tank module (10) to a primary structure element of the aircraft,
**characterized in that**
the outer surface (18) of the pressure-free tank shell (12) is provided with at least one raceway (42) adapted to accommodate and attach at least one tube or line to the pressure-free tank shell (12) so that the fluid tank module (10) is adapted to be used as a carrier element for piping and lines of further aircraft systems.

2. Aircraft according to claim 1,
wherein the contour of at least a first portion (18a) of the outer surface (18) of the pressure-free tank shell (12) is adjusted to a contour of an inner surface of (20) an aircraft fuselage outer shell (22).

3. Aircraft according to claim 2,
wherein the first portion (18a) of the outer surface (18) of the pressure-free tank shell (12) is provided with at least one recess (24, 26) adapted to accommodate a primary structure element of the aircraft when the fluid tank module (10) is mounted in the aircraft.

4. Aircraft according to claim 3,
wherein the at least one recess (24, 26) provided in the first portion (18a) of the outer surface (18) of the pressure-free tank shell (12) is adapted to accommodate at least one of a stringer (28) and a rib (30).

5. Aircraft according to any one of claims 2 to 4,
wherein an isolation material layer (32) is applied to the first portion (18a) of the outer surface (18) of the pressure-free tank shell (12).

6. Aircraft according to claims 5,
wherein the isolation material layer (32) applied to the first portion (18a) of the outer surface (18) of the pressure-free tank shell (12) is made of an isolation foam.

7. Aircraft according to any one of claims 1 to 6,
wherein the at least one raceway (42) comprises:
- a groove (44) formed in the outer surface (18) of the pressure-free tank shell (12) and being adapted to accommodate at least one tube or line, and
- at least one attachment device (46) adapted to attach the at least one tube or line accommodated in the groove (44) to the pressure-free tank shell (12).

8. Aircraft according to any one of claims 1 to 7,
wherein the at least one raceway (42) is arranged on a second portion (18b) of the outer surface (18) of the pressure-free tank shell (12) which faces away from the aircraft fuselage outer shell (22) when the fluid tank module (10) is mounted in the aircraft.

9. Aircraft according to any one of claims 1 to 8,
wherein the at least one raceway (42) extends substantially parallel to a longitudinal axis of the aircraft when the fluid tank module (10) is mounted in the aircraft.

10. Aircraft according to any one of claims 1 to 9, further comprising:
a water supply line (102) connecting the fluid tank module (10) to a water consuming aircraft component (104) so as to supply water accommodated in the fluid tank module (10) to the water consuming aircraft component (104).

11. Aircraft according to claim 10,
further comprising a pump (106) adapted to convey water accommodated in the fluid tank module (10) to the water consuming aircraft component (104).

12. Aircraft according to any one of claims 1 to 9, further comprising: a waste water line (202) connecting a water consuming aircraft component (204) to the fluid tank module (10) so as to discharge waste water from the water consuming aircraft component (204) to the fluid tank module (10).

13. Aircraft according to claim 12,
further comprising a pre-tank (206) designed in form of a vacuum tank and being adapted to provide a suction force for conveying the waste water from the water consuming aircraft component (204) to the pre-tank (206).

14. Aircraft according to claim 13,
further comprising a pump (208) adapted to convey water accommodated in the pre-tank (206) into the fluid tank module (10).

## Patentansprüche

1. Flugzeug versehen mit einem Fluidtankmodul (10), wobei das Fluidtankmodul (10) Folgendes umfasst:
- einen drucklosen Tankmantel (12) mit einer Außenfläche (18), dessen Kontur an eine Kontur eines Einbauraumes angepasst ist, der an Bord des Flugzeugs zum Einbau des Fluidtankmoduls (10) vorgesehen ist, wobei der Druck eines Fluids, das sich im Tankmantel (12) des Fluidtankmoduls (10) befindet, dem Umgebungsdruck entspricht, der in einem Bereich des Flugzeugs herrscht, in dem das Fluidtankmodul (10) eingebaut ist, und
- mindestens eine Befestigungsvorrichtung (34) zur Befestigung des Fluidtankmoduls (10) an einem Primärstrukturelement des Flugzeugs,
**dadurch gekennzeichnet, dass**
die Außenfläche (18) des drucklosen Tankmantels (12) mit mindestens einer Laufbahn (42) versehen ist, die so angepasst ist, dass mindestens ein Rohr oder eine Leitung am drucklosen Tankmantel (12) aufgenommen und befestigt werden kann, sodass das Fluidtankmodul (10) geeignet ist, als Trägerelement für Rohrleitungen und Leitungen weiterer Flugzeugsysteme verwendet zu werden.

2. Flugzeug nach Anspruch 1,
wobei die Kontur mindestens eines ersten Abschnitts (18a) der Außenfläche (18) des drucklosen Tankmantels (12) auf eine Kontur einer Innenfläche (20) einer Flugzeugrumpfaußenschale (22) angepasst ist.

3. Flugzeug nach Anspruch 2,
wobei der erste Abschnitt (18a) der Außenfläche (18) des drucklosen Tankmantels (12) mit mindestens einer Aussparung (24, 26) versehen ist, die zur Aufnahme eines Primärstrukturelements des Flugzeugs ausgebildet ist, wenn das Fluidtankmodul (10) im Flugzeug montiert ist.

4. Flugzeug nach Anspruch 3,
wobei die mindestens eine Aussparung (24, 26), die im ersten Abschnitt (18a) der Außenfläche (18) des drucklosen Tankmantels (12) vorgesehen ist, geeignet ist, mindestens eines von einem Stringer (28) und einer Rippe (30) aufzunehmen.

5. Flugzeug nach einem der Ansprüche 2 bis 4,
wobei eine Isoliermaterialschicht (32) auf den ersten Abschnitt (18a) der Außenfläche (18) des drucklosen Tankmantels (12) aufgebracht ist.

6. Flugzeug nach Anspruch 5,
wobei die Isoliermaterialschicht (32), die auf den ersten Abschnitt (18a) der Außenfläche (18) des drucklosen Tankmantels (12) aufgebracht wird, aus einem Isolierschaum besteht.

7. Flugzeug nach einem der Ansprüche 1 bis 6,
wobei die mindestens eine Laufbahn (42) Folgendes umfasst:
- eine Nut (44), die in der Außenfläche (18) des drucklosen Tankmantels (12) ausgebildet ist und mindestens ein Rohr oder eine Leitung aufnehmen kann, und
- mindestens eine Befestigungsvorrichtung (46) zum Befestigen des mindestens einen Rohres oder der mindestens einen Leitung, die in der Nut (44) aufgenommen wird, am drucklosen Tankmantel (12).

8. Flugzeug nach einem der Ansprüche 1 bis 7,
wobei die mindestens eine Laufbahn (42) auf einem zweiten Abschnitt (18b) der Außenfläche (18) des drucklosen Tankmantels (12) angeordnet ist, der von der Flugzeugrumpfaußenschale (22) abgewandt ist, wenn das Fluidtankmodul (10) im Flugzeug montiert ist.

9. Flugzeug nach einem der Ansprüche 1 bis 8,
wobei sich die mindestens eine Laufbahn (42) im Wesentlichen parallel zu einer Längsachse des Flugzeugs erstreckt, wenn das Fluidtankmodul (10) in dem Flugzeug montiert ist.

10. Flugzeug nach einem der Ansprüche 1 bis 9, ferner umfassend:
eine Wasserversorgungsleitung (102), die das Fluidtankmodul (10) mit einer wasserverbrauchenden Flugzeugkomponente (104) verbindet, um Wasser, das sich im Fluidtankmodul (10) befindet, an die wasserverbrauchende Flugzeugkomponente (104) zu liefern.

11. Flugzeug nach Anspruch 10,
ferner umfassend eine Pumpe (106), die geeignet ist, Wasser, das sich im Fluidtankmodul (10) befindet, zur wasserverbrauchenden Flugzeugkomponente (104) zu fördern.

12. Flugzeug nach einem der Ansprüche 1 bis 9, ferner umfassend: eine Abwasserleitung (202), die eine wasserverbrauchende Flugzeugkomponente (204) mit dem Fluidtankmodul (10) verbindet, um Abwasser von der wasserverbrauchenden Flugzeugkomponente (204) zum Fluidtankmodul (10) abzuführen.

13. Flugzeug nach Anspruch 12,
ferner umfassend einen Vortank (206), der in Form eines Vakuumtanks ausgebildet und ausgelegt ist, eine Saugkraft zum Fördern des Abwassers von der wasserverbrauchenden Flugzeugkomponente (204) zum Vortank (206) bereitzustellen.

14. Flugzeug nach Anspruch 13,
ferner umfassend eine Pumpe (208) zum Fördern von Wasser, das sich im Vortank (206) befindet, in das Fluidtankmodul (10).

## Revendications

1. Aéronef équipé d'un module de réservoir de fluide (10), le module de réservoir de fluide (10) comprenant :
- une enveloppe de réservoir sans pression (12) ayant une surface extérieure (18), dont un contour est ajusté à un contour d'un espace d'installation prévu à bord de l'aéronef pour l'installation du module de réservoir de fluide (10), la pression d'un fluide logé dans l'enveloppe de réservoir (12) du module de réservoir de fluide (10) correspond à la pression ambiante régnant dans une région de l'aéronef où le module de réservoir de fluide (10) est installé, et
- au moins un dispositif de fixation (34) adapté pour fixer le module de réservoir de fluide (10) à un élément de structure primaire de l'aéronef,
**caractérisé en ce que**
la surface extérieure (18) de l'enveloppe de réservoir sans pression (12) est munie d'au moins une canalisation (42) adaptée pour recevoir et fixer au moins un tube ou une conduite à l'enveloppe de réservoir sans pression (12) de sorte que le module de réservoir de fluide (10) est adapté pour être utilisé comme élément porteur pour la tuyauterie et les conduites d'autres systèmes aéronautiques.

2. Aéronef selon la revendication 1,
dans lequel le contour d'au moins une première partie (18a) de la surface extérieure (18) de l'enveloppe de réservoir sans pression (12) est ajusté à un contour d'une surface intérieure (20) d'une coque extérieure (22) de fuselage d'aéronef.

3. Aéronef selon la revendication 2,
dans lequel la première partie (18a) de la surface extérieure (18) de l'enveloppe de réservoir sans pression (12) est munie d'au moins un évidement (24, 26) adapté pour recevoir un élément de structure primaire de l'aéronef lorsque le module de réservoir de fluide (10) est monté dans l'aéronef.

4. Aéronef selon la revendication 3,
dans lequel ledit au moins un évidement (24, 26) prévu dans la première partie (18a) de la surface extérieure (18) de l'enveloppe de réservoir sans pression (12) est adapté pour recevoir un longeron (28) et/ou une nervure (30).

5. Aéronef selon l'une quelconque des revendications 2 à 4,
dans lequel une couche de matériau d'isolation (32) est appliquée sur la première partie (18a) de la surface extérieure (18) de l'enveloppe de réservoir sans pression (12).

6. Aéronef selon la revendication 5,
dans lequel la couche de matériau d'isolation (32) appliquée sur la première partie (18a) de la surface extérieure (18) de l'enveloppe de réservoir sans pression (12) est constituée d'une mousse d'isolation.

7. Aéronef selon l'une quelconque des revendications 1 à 6,
dans lequel ladite au moins une canalisation (42) comprend :
- une rainure (44) formée dans la surface extérieure (18) de l'enveloppe de réservoir sans pression (12) et adaptée pour recevoir au moins un tube ou une conduite, et
- au moins un dispositif de fixation (46) adapté pour fixer ledit au moins un tube ou une conduite logé dans la rainure (44) à l'enveloppe de réservoir sans pression (12).

8. Aéronef selon l'une quelconque des revendications 1 à 7,
dans lequel ladite au moins une canalisation (42) est disposée sur une seconde partie (18b) de la surface extérieure (18) de l'enveloppe de réservoir sans pression (12) qui fait face à l'enveloppe extérieure (22) du fuselage de l'aéronef lorsque le module de réservoir de fluide (10) est monté dans l'aéronef.lequel ladite au moins une canalisation.

9. Aéronef selon l'une quelconque des revendications 1 à 8,
dans lequel ladite au moins une canalisation (42) s'étend sensiblement parallèlement à un axe longitudinal de l'aéronef lorsque le module de réservoir de fluide (10) est monté dans l'aéronef.

10. Aéronef selon l'une quelconque des revendications 1 à 9, comprenant en outre :
une conduite d'alimentation en eau (102) reliant le module de réservoir de fluide (10) à un composant d'aéronef consommateur d'eau (104) de manière à fournir de l'eau logée dans le module de réservoir de fluide (10) au composant d'aéronef consommateur d'eau (104).

11. Aéronef selon la revendication 10,
comprenant en outre une pompe (106) adaptée pour transporter de l'eau logée dans le module de réservoir de fluide (10) vers le composant d'aéronef consommateur d'eau (104).

12. Aéronef selon l'une quelconque des revendications 1 à 9, comprenant en outre : une conduite d'eaux usées (202) reliant un composant d'aéronef consommateur d'eau (204) au module de réservoir de fluide (10) de manière à évacuer les eaux usées du composant d'aéronef consommateur d'eau'eau (204) vers le module de réservoir de fluide (10).

13. Aéronef selon la revendication 12,
comprenant en outre un pré-réservoir (206) conçu sous la forme d'un réservoir à vide et adapté pour fournir une force d'aspiration pour transporter les eaux usées du composant d'aéronef (204) consommateur d'eau vers le pré-réservoir (206).

14. Aéronef selon la revendication 13,
comprenant en outre une pompe (208) adaptée pour transporter de l'eau logée dans le pré-réservoir (206) dans le module de réservoir de fluide (10).
